Europäisches Patentamt

**European Patent Office**

Office européen des brevets

(19)

(11) Veröffentlichungsnummer: **0 062 339**
**B1**

(12) **EUROPÄISCHE PATENTSCHRIFT**

(45) Veröffentlichungstag der Patentschrift:
04.06.86

(51) Int. Cl.⁴: **B 03 B 9/06,** B 28 C 9/00

(21) Anmeldenummer: **82102875.0**

(22) Anmeldetag: **03.04.82**

(54) **Einrichtung zur Wiederaufbereitung von Restbeton.**

(30) Priorität: **04.04.81 DE 3113651**

(43) Veröffentlichungstag der Anmeldung:
**13.10.82 Patentblatt 82/41**

(45) Bekanntmachung des Hinweises auf die Patenterteilung:
**04.06.86 Patentblatt 86/23**

(84) Benannte Vertragsstaaten:
**AT BE CH FR GB IT LI NL SE**

(56) Entgegenhaltungen:
**EP - A - 0 017 504**
**DE - A - 2 617 837**
**DE - A - 2 929 857**
**DE - A - 3 027 503**
**FR - A - 2 364 749**
**GB - A - 2 057 166**
**US - A - 3 997 434**

(73) Patentinhaber: **Bozenhardt, Friedrich, Mörikestrasse 41,
D-7441 Neckartailfingen (DE)**

(72) Erfinder: **Bozenhardt, Friedrich, Mörikestrasse 41,
D-7441 Neckartailfingen (DE)**

(74) Vertreter: **Möbus, Rudolf, Dipl.-Ing.,
Hindenburgstrasse 65, D-7410 Reutlingen (DE)**

ACTORUM AG

## Beschreibung

Die Erfindung betrifft eine Einrichtung zur Wiederaufbereitung von Restbeton, mit einer Auswaschvorrichtung, in welcher der Betonschlamm von Sand oder Kies getrennt und in eine Vorflutkammer geleitet wird, aus welcher er mittels einer ersten Pumpe in einen Speicher mit Wirbelvorrichtung gefördert wird, und mit einer zweiten Pumpe zur Förderung von Betonschlamm aus dem Speicher in ein Betonmischwerk.

Eine Einrichtung mit den vorstehend genannten Merkmalen ist aus der DE-A-2 617 837 bekannt. Diese Einrichtung ist unter dem Gesichtspunkt der Klärung des mit Betonschlamm versetzten Wassers entwickelt worden, damit das Wasser in die üblichen Kläranlagen abgeleitet werden kann. Der Rückbeton oder Spülbeton wird in einem Schlammbehälter mit Hilfe einer Umwälzpumpe in stets gleicher Konsistenz gehalten und kann entweder einem Schlammentwässerungs-Container oder aber einer Schlammdosieranlage zugeführt werden. Zur Begünstigung der Ausfällung des Restbetons wird ein Flockungsmittel eingesetzt. Der mit diesem Flockungsmittel versetzte Betonschlamm, der in der Schlammdosieranlage gesammelt wird, kann aber nur in begrenztem Umfang als minderwertiger Beton weiterverwertet werden, so dass bei einer solchen Einrichtung zwangsläufig der meiste anfallende Betonschlamm im Schlammentwässerungs-Container auf eine Mülldeponie transportiert werden muss.

Der Erfindung liegt die Aufgabe zugrunde, eine Einrichtung der eingangs genannten Art noch wirkungsvoller und betriebssicherer und so zu gestalten, dass der Restbeton in wiederverwertbarer Form in einem gewünschten Anteil einer Frischbetonmischvorrichtung beigemengt werden kann.

Die gestellte Aufgabe wird mit einer Einrichtung der eingangs genannten Art erfindungsgemäss dadurch gelöst, dass zwischen einem als Speicher dienenden Silobehälter und dem Betonmischwerk ein Umschaltblock gelegt ist, über welchen die an die Pumpe angeschlossene Betonförderleitung geführt ist und der zusätzlich einen Anschluss für eine Frischwasserleitung und einen Anschluss für eine Rückleitung zum Silobehälter aufweist, dass der Umschaltblock mit einer zum Rückleitungsanschluss führenden Abzweigung von dem zwischen Anschlüssen verlaufenden Betonförderzweig versehen ist und dass der Frischwasseranschluss über ein erstes Schaltventil mit dem Rückleitungsanschluss und über ein zweites Schaltventil mit der Abzweigung verbunden ist. Dabei kann zweckmässig beiden Anschlüssen für den Betonförderzweig jeweils ein Schaltventil zugeordnet sein und vorteilhafterweise in der Nähe des silobehälterseitigen Anschlusses des Betonförderzweiges des Umschaltblockes ein Sensor zur Bestimmung der Feststoffkonzentration des Betonschlammes angeordnet werden.

Durch den Umschaltblock lässt sich rasch und wirkungsvoll nicht nur die Weiterleitung des Betonschlamms in eine Betonmischanlage zur Wiederverwertung, sondern auch die Frischwasserzufuhr in die vorgeschalteten Einrichtungsteile, nämlich die Auswaschvorrichtung und die Vorflutkammer, zur Vermeidung einer zu starken Eindikkung des Betonschlammes, aber auch zum Ausspülen der angeschlossenen Betonschlammleitungen, steuern. Durch den Umschaltblock ist auch die Voraussetzung für einen weitgehend automatischen Betrieb einer solchen Wiederaufbereitungsanlage geschaffen.

Nachfolgend wird ein Ausführungsbeispiel einer erfindungsgemäss ausgebildeten Wiederaufbereitungseinrichtung anhand der beiliegenden Zeichnung näher erläutert.

Im einzelnen zeigen:

Fig. 1 eine schematische Darstellung der gesamten, einer Betonmischanlage zugeordneten Wiederaufbereitungseinrichtung;

Fig. 2 eine Einzeldarstellung des in der Wiederaufbereitungseinrichtung verwendeten Umschaltblockes.

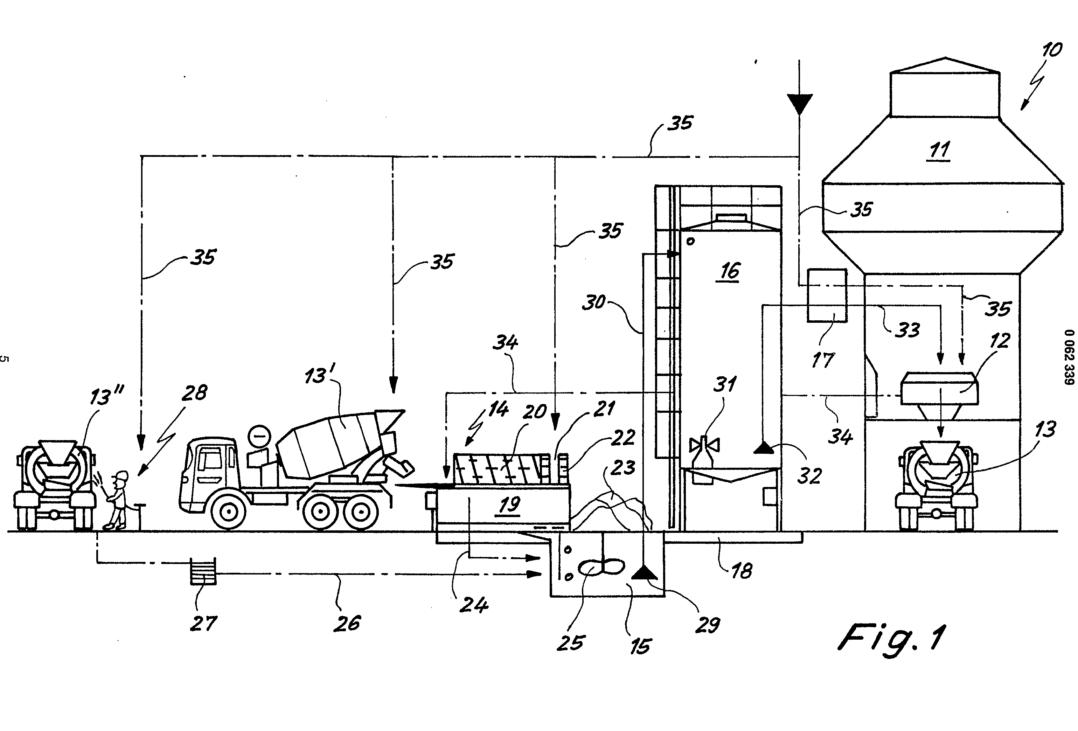

In der schematischen Gesamtdarstellung der Fig. 1 ist eine Betonmischanlage 10 mit turmartigem Zementspeicher 11 und einem unterhalb des Zementspeichers 11 angeordneten Betonmischwerk 12 dargestellt. Aus dem Betonmischwerk 12 wird der Fertigbeton in bekannter Weise direkt in ein Betonmischfahrzeug 13 ausgegeben.

Die der Betonmischanlage 10 zugeordnete Wiederaufbereitungseinrichtung für den Restbeton weist eine Auswaschvorrichtung 14, eine nachgeschaltete, hier in den Boden eingelassene Vorflutkammer 15 und einen als Speicher für den Restbetonschlamm dienenden Silobehälter 16 auf. Die ganzen Einrichtungsteile 14, 15, 16 und ein der Wiederaufbereitungseinrichtung zugeordneter Umschaltblock 17 können zweckmässig auf einer gemeinsamen, transportablen Plattform angeordnet sein, die in Fig. 1 mit der Bezugsziffer 18 bezeichnet ist. In Fig. 1 sind die einzelnen Teile jedoch zur Veranschaulichung auseinandergezogen dargestellt. Auch sind die normalerweise fest auf der Plattform 18 montierten Verbindungsleitungen in den einzelnen Einrichtungsteilen nicht dargestellt, sondern nur durch Pfeillinien angedeutet.

Die Auswaschvorrichtung 14 besteht aus einem Trog 19 mit einem Rotor 20 in Form einer Förderschnecke. Eine solche Auswaschvorrichtung ist beispielsweise in der DE-A-2 929 857 näher beschrieben. Die Auswaschvorrichtung weist eine Nachwaschkammer 21 für den im Restbeton enthaltenen Kies auf, der durch ein in Fig. 1 angedeutetes Schöpfrad 22 auf einen Kieshaufen 23 ausgetragen wird. Der von Steinen befreite Betonschlamm wird über eine durch den Pfeil 24 angedeutete Leitung in die Vorflutkammer 15 geleitet, wo ein exzentrisch angeordnetes, intermittierend betriebenes Rührwerk 25 für eine dauernde Aufwirbelung des gesammelten Betonschlammes sorgt. Der Auswaschvorrichtung 14 wird der Restbeton direkt aus den Betonmischfahrzeugen 13' zugeführt, so dass hier kein Zusatzschmutz anfällt und ausgeschieden werden müsste. An die Vorflutkammer 15 ist beim dargestellten Ausführungsbeispiel noch ein durch eine strichpunktierte Linie 26 angedeutete Zuflussleitung angeschlossen, die über einen Ölabscheider 27 von einem entfernten Waschplatz 28 kommt, wo ebenfalls Betonmischfahrzeuge 13″ gereinigt werden. Es versteht sich, dass dieser Waschplatz 28 von Fremdschmutz so gut wie möglich freigehalten wird, so dass hier einfache Siebvorrichtungen zum Zurückhalten von Kies und ein Ölabscheider als Vorreinigungselemente ausreichen.

Aus der Vorflutkammer 15 wird der Betonschlamm mittels einer Pumpe 29 durch eine wiederum als Pfeillinie 30 angedeutete Leitung von oben her in den Silobehälter 16 eingegeben, dessen Füllzustand durch eine nicht dargestellte Schwimmschaltvorrichtung kontrolliert wird. Im Bodenbereich des Silobehälters 16 ist wiederum ein kontinuierlich oder intermittierend betriebenes Rührwerk 31 exzentrisch angeordnet. Im Bodenbereich des Silobehälters 16 befindet sich auch eine weitere Pumpe 32, mit deren Hilfe der Betonschlamm aus dem Silobehälter über den Umschaltblock 17 in die Betonmischvorrichtung 12 der Betonmischanlage 10 geleitet wird. Die Leitung ist wieder durch eine Pfeillinie 33 angedeutet. Auch der Restbeton aus der Betonmischvorrichtung 12 der Betonmischanlage 10 wird nach Abschalten der Mischvorrichtung in die Auswaschvorrichtung 14 der Wiederaufbereitungseinrichtung eingegeben, wie durch eine strichpunktierte Verbindungsleitung 34 in Fig. 1 angedeutet ist.

Fast alle Einrichtungsteile sind an eine Frischwasserzufuhr angeschlossen. Diese Frischwasserzufuhr ist durch gestrichelte Pfeillinien 35 angedeutet. Eine solche Frischwasserzufuhrleitung 35 führt auch zum Umschaltblock 17.

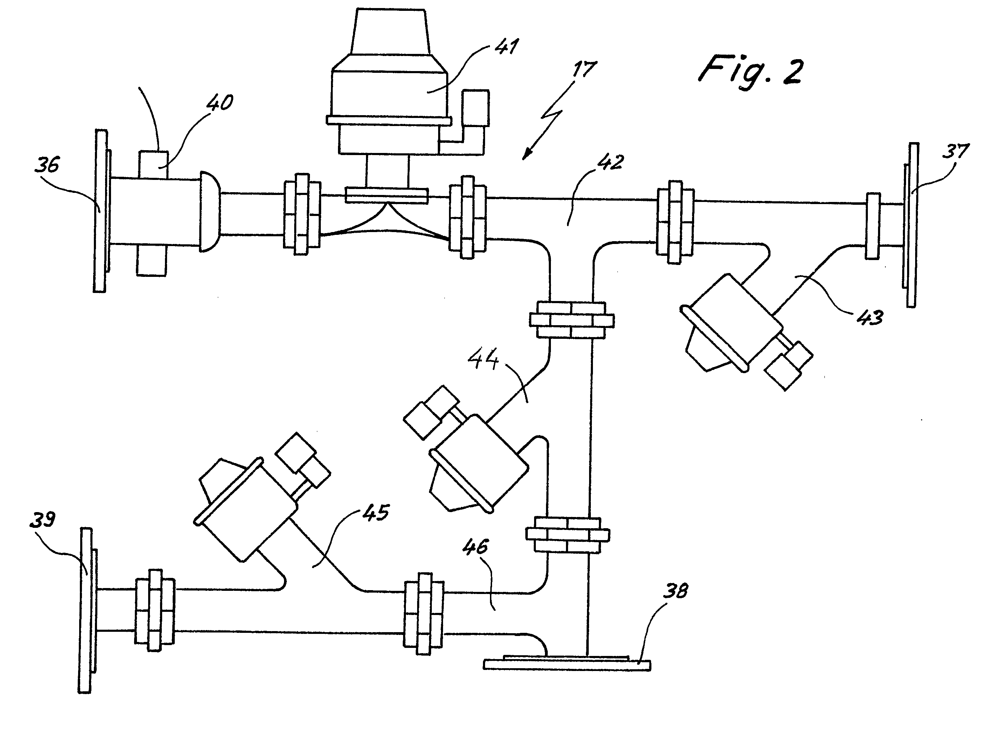

Fig. 2 zeigt den Umschaltblock 17 in Einzeldarstellung. Er weist mehrere Rohrleitungsanschlüsse auf, nämlich einen ersten Anschluss 36 für eine zum Silobehälter 16 führende Leitung, einen Anschluss 37 für die zur Betonmischvorrichtung 12 führende Leitung 33 (Fig. 1), einen Anschluss 38 für eine Frischwasserleitung und einen zweiten Anschluss 39 für eine zum Silobehälter 16 führende Rohrleitung. Am Anschluss 36 ist ein Sensor 40 angeordnet, mit welchem der Feststoffanteil im hier zugeführten Betonschlamm erfasst wird. Der Anschluss 36 ist über ein Schaltventil 41, über eine Leitungsverzweigung 42 und über ein Schaltventil 43 mit dem Anschluss 37 verbunden. Die Leitungsverzweigung 42 ist über ein Schaltventil 44 mit dem Anschluss 38 für die Frischwasserleitung verbunden. In diese Verbindung mündet am Frischwasseranschluss 38 eine Verbindungsleitung 46, die über ein Schaltventil 45 zu dem zweiten zum Silobehälter 16 führenden Anschluss 39 führt.

Die Wirkungsweise der Wiederaufbereitungseinrichtung ist folgende:

In der Auswaschvorrichtung 14 wird aus dem aus Mischfahrzeugen 13′ und/oder aus der Mischvorrichtung 12 der Betonmischanlage 10 eingegebener Restbeton im Gegenströmungsverfahren unter Zufuhr von Frischwasser aus einer Frischwasserleitung 35 in den Kies 23 und eine Betonbrühe getrennt, welch letztere in die Vorflutkammer 15 abgeleitet wird. Dort wird dieser Betonschlamm durch das Rührwerk 25 in Bewegung und somit in Mischung gehalten, so dass kein Absetzen und Abbinden von Beton erfolgen kann. Aus der Vorflutkammer 15 wird der Betonschlamm mittels der Pumpe 29 in den Silobehälter 16 als eigentlichen Speicherbehälter gepumpt, wo das am Boden angeordnete Rührwerk 31 ein Absetzen und Verbacken von Betonfeststoffen verhindert. Aus dem Silobehälter 16 wird der Restbetonschlamm mittels der Pumpe 32 über den Umschaltblock 17 – gesteuert durch eine nicht dargestellte, auf die Pumpen 29, 32 und den Umschaltblock 17 einwirkende Steuereinrichtung – in einem gewünschten Anteil in die Frischbetonmischvorrichtung 12 zur Wiederverwertung eingegeben.

Der Umschaltblock 17 erlaubt folgende Einstellungen: Durch Öffnen der Schaltventile 41 und 43 kann durch die Pumpe 32 geförderter Betonschlamm aus dem Silobehälter 16 durch den Umschaltblock 17 hindurch in die Mischvorrichtung 12 fliessen. Meldet der Sensor 40 hierbei eine zu starke Feststoffkonzentration in diesem Betonschlamm, wird auch das Schaltventil 45 geöffnet, so dass über den zweiten zum Silobehälter führenden Anschluss 39 über den Anschluss 38 geliefertes Frischwasser in den Silobehälter zum Verdünnen des darin befindlichen Betonschlammes fliessen kann. Sobald eine Verringerung der Feststoffkonzentration am Sensor 40 festgestellt wird, schliesst das Schaltventil 45 wieder.

Durch Öffnen des Schaltventiles 44 kann zum Spülen der Verbindungsleitungen Frischwasser vom Anschluss 38 über die Leitungsverzweigung 42 in die Verbindungsleitung 33 zwischen dem Silobehälter 16 und der Mischvorrichtung 12 geleitet werden. Durch gleichzeitiges Öffnen des Schliessventiles 41 wird der zum Silobehälter 16 führende Leitungszweig gereinigt, während bei gleichzeitigem Öffnen des Schaltventiles 43 der vom Umschaltblock 17 zu der Mischvorrichtung 12 führende Abschnitt der Leitung 33 mit Frischwasser gereinigt wird. Auch kann die gesamte Frischwasserzuleitung zur Mischvorrichtung 12 über den Umschaltblock vorgenommen werden, was beim Öffnen der Schaltventile 43 und 44 erreicht wird.

## Patentansprüche

1. Einrichtung zur Wiederaufbereitung von Restbeton, mit einer Auswaschvorrichtung (14), in welcher der Betonschlamm von Sand oder Kies getrennt und in eine Vorflutkammer (15) geleitet wird, aus welcher er mittels einer ersten Pumpe (29) in einen Speicher (16) mit Wirbelvorrichtung (31) gefördert wird, und mit einer zweiten Pumpe (32) zur Förderung von Betonschlamm aus dem Speicher (16) in ein Betonmischwerk (12), dadurch gekennzeichnet, dass zwischen einem als Speicher dienenden Silobehälter (16) und dem Betonmischwerk (12) ein Umschaltblock (17) gelegt ist, über welchen die an die Pumpe (32) angeschlossene Betonförderleitung (33) geführt ist und der zusätzlich einen Anschluss (38) für eine Frischwasserleitung (35) und einen Anschluss (39) für eine Rückleitung zum Silobehälter (16) aufweist, dass der Umschaltblock (17) mit einer zum Rückleitungsanschluss (39) führenden Abzweigung (42) von dem zwischen Anschlüssen (36, 37) verlaufenden Betonförderzweig versehen ist und dass der Frischwasseranschluss (38) über ein erstes Schaltventil (45) mit dem Rückleitungsanschluss (39) und über ein zweites Schaltventil (44) mit der Abzweigung (42) verbunden ist.

2. Einrichtung nach Anspruch 1, dadurch gekennzeichnet, dass beiden Anschlüssen (36, 37) für den Betonförderzweig jeweils ein Schaltventil (41, 43) zugeordnet ist.

3. Einrichtung nach Anspruch 1 und 2, dadurch gekennzeichnet, dass in der Nähe des silobehälterseitigen Anschlusses (36) des Betonförderzweiges des Umschaltblockes (17) ein Sensor (40) zur Bestimmung der Feststoffkonzentration des Betonschlammes angeordnet ist.

## Claims

1. Plant for the reclaiming waste concrete having a washing device (14) in which the concrete slurry is separated from sand or gravel and is conducted into a draining chamber (15) from which it is conveyed by means of a first pump (29) into a store (16) having a whirling device (31), and having a second pump (32) for the conveyance of concrete slurry out of the store (16) into a concrete mixer (12), characterised in that between a silo bin (16) serving as the store and the concrete mixer (12) is located a switch-over block (17) by way of which the concrete conveyor pipe (33) connected to the pump (32) is conducted and which additionally has a connection (38) for a fresh-water pipe (35) and a connection (39) for a return pipe to the silo bin (16), in that the switch-over block (17) is provided with a branch (42), leading to the return-pipe connection (39), from the concrete conveyor branch extending between connections (36, 37), and in that the fresh-water connection (38) is connected by way of a first switching valve (45) to the return-pipe connection (39), and by way of a second switching valve (44) to the branch (42).

2. Plant according to claim 1 characterised in that a respective switching valve (41, 43) is associated with the two connections (36, 37) for the concrete conveyor branch.

3. Plant according to claim 1 and 2 characterised in that a sensor (4), for determining the solid-matter concentration of the concrete slurry, is arranged in the vicinity of the silo-container-side connection (36) of the concrete conveyor branch of the switch-over block (17).

## Revendications

1. Système permettant de retraiter le béton résiduel, comportant un dispositif de lavage (14), dans lequel le béton préfabriqué est séparé du sable ou du gravier et dirigé sur une chambre de décharge (15) d'où il est envoyé par une première pompe (29) dans un réservoir (16) équipé d'un dispositif d'agitation (31), après quoi il est repris par une seconde pompe (32) pour être envoyé dans un mélangeur à béton (12), caractérisé en ce que, entre un silo (16) servant de réservoir et le mélangeur à béton (12), est prévu un étage de commutation (17) par lequel passe la conduite de transport de béton (33) raccordée à la pompe (32) et qui, en outre, possède un raccordement (38) pour une conduite d'eau fraîche (35) et un raccordement (39) pour une conduite de retour au silo (16), en ce que l'étage de commutation (17) est équipé d'une dérivation (42), menant au raccordement de conduite de retour (39), de l'embranchement de transport de béton prévu entre des raccordements (36, 37), et en ce que le raccordement d'eau fraîche (38) est relié au raccordement de conduite de retour (39) par l'intermédiaire d'une première valve de commutation (45) et à la dérivation (42) par l'intermédiaire d'une seconde valve de commutation (44).

2. Système conforme à la revendication 1, caractérisé en ce qu'une valve de commutation (41, 43) peut être affectée à chacun des deux raccordements (36, 37) correspondant à l'embranchement de transport de béton.

3. Système conforme aux revendications 1 et 2, caractérisé en ce qu'à proximité du raccordement (36), côté silo, de l'embranchement de transport de béton de l'étage de commutation (17) est implanté un capteur (40) qui permet de déterminer la concentration de matières solides du béton préfabriqué.

Fig.1

0 062 339

Fig. 2